# EUROPEAN PATENT APPLICATION

(11) **EP 1 318 416 A1**
(43) Date of publication of application: **11.06.2003**
(21) Application number: 02258434.6
(22) Date of filing: 06.12.2002
(51) Int. Cl.: G02B 1/04, C08G 63/199, C08L 67/02, C08L 69/00

(54) **Optical plastic component**

(30) Priority: 10.12.2001 JP 2001376256
(71) Applicant: GENERAL ELECTRIC COMPANY, Schenectady, NY 12345 (US)
(72) Inventor: Duan, Xuan-ming, Mino-shi, Osaku-fu 562-0004 (JP); Sato, Mitsunobu, Utsunomiya-shi, Tochigi-ken 321-0954 (JP)
(74) Representative: Szary, Anne Catherine, Dr.

(57) **Abstract**

Optical parts are obtained from the thermoplastic resin compositions containing alicyclic polyester, e.g., polycyclohexanedimethanolcyclohexane dicarboxylate as the alicyclic resin. The thermoplastic resin compositions contain alicyclic polyester as well as polycarbonate with the polycarbonate: alicyclic polyester weight ratio is in the range of 0:100 to 95:5, for optical elements having excellent chemical resistance and transmittance characteristics.

## Description

The invention relates to optical elements obtained from a thermoplastic resin composition containing alicyclic polyester.

Optical elements, such as lenses, lens covers, LED aperture, monitors, electric lamps, etc., have a number of required characteristics such as impact resistance, chemical resistance, weather resistance, etc. for indoor as well as outdoor applications in order to protect the surface and the transparency for light transmission purposes.

In such applications, the resin composition of the prior art typically comprises conventional amorphous polyolefin resin (PO), polyester, polymethacrylate (PMMA), amorphous polyamide (PA), polyarylate, polycarbonate (PC) resin, etc.

Aromatic polyesters, such as PET are transparent, provide flexibility in designing, such as coloring. They are more rigid than polyolefin resins, but they cannot be used in optical applications requiring high impact strength as their impact strength in non-ductile state is comparatively low.

Polycarbonate resin has high impact resistance and like polyethylene terephthalate, does not pose much designing problem, such as coloring in the initial stage of the application. However, over time, polycarbonate becomes yellowish, or upon being in contact with widely used chemicals (specifically gasoline or alkaline detergents), polycarbonate exhibits whitening tendency. In applications wherein the polycarbonate surface is coated with a chemical resistant, the process itself becomes complicated and manufacturing cost also goes up.

With respect to polyamide, amorphous polyamide is a very costly raw material. When it is used for a general-purpose as mentioned in the invention, it raised the product cost.

The inventors have found that in order to solve the above-mentioned technological problems, i.e. transparency, impact resistance, long-term discoloration (weather resistance), chemical resistance, etc., optical elements employing composition containing alicyclic polyester exhibit an excellent balance of these characteristics in comparison to the optical elements of the prior art which comprise conventional resins. Additionally, we have found that the optical elements of the present invention can be made to be thin and light-weight, and thus of low cost .

### SUMMARY OF THE INVENTION

The invention relates to optical elements with excellent transparency, impact resistance, chemical resistance and weather resistance and an excellent balance of these characteristics. The optical elements are characterized by obtaining from thermoplastic resin composition containing alicyclic polyester.

The invention also relates to optical elements employing as the above-mentioned alicyclic polyester, polycyclohexanedimethanolcyclohexanedicarboxylate (hereafter abbreviated as PCCD). The invention further relates to optical elements comprising a blend of polycarbonate and alicyclic polyester and, wherein the weight ratio of polycarbonate: alicyclic polyester should be in the range of 0:100 to 95:5.

In one embodiment, the polycarbonate comprises bisphenol A, spirobiindan bisphenol, aryl substituted bisphenol, alicyclic bisphenol or the structural units derived from their mixture.

The optical elements are characterized as comprising a thermoplastic composition having a light transmittance of at least 75% and the glass transition temperature in the range of 50 to 150°C.

The invention further relates to optical elements comprising alicyclic polyester and about less than 20% of a transparent impact resistance improving agent, wherein the refractive index of the impact resistance improving agent should be in the range of 1.51 to 1.58, and wherein in one embodiment, impact resistance improving agent is acrylonitrile-butadiene-styrene (ABS) resin.

Lastly, the invention relates to the optical elements in the form of injection molding components, blow molding components, extrusion molding components, vacuum-pressure molding components, or by the inflation method by T-die casting after thermal fusion, and further a film is desired by casting or spin coating after dissolving into an appropriate solvent.

### BRIEF DESCRIPTION OF THE DRAWING

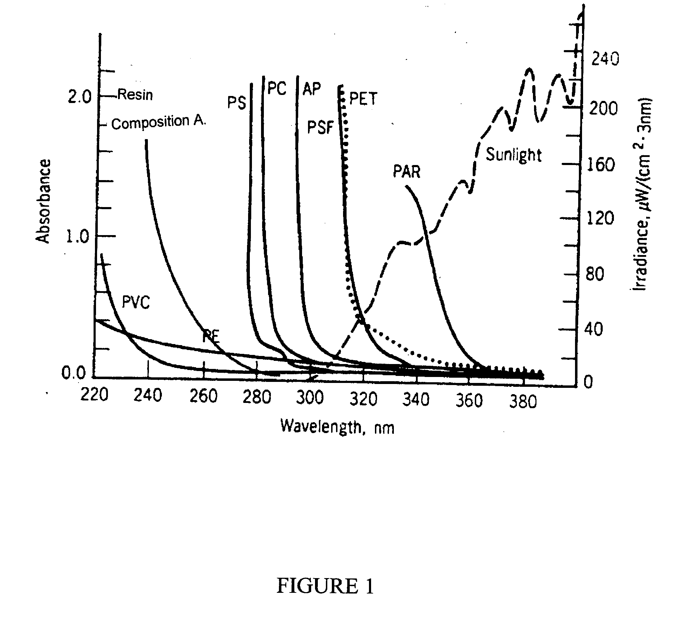

Figure 1 illustrates the ultraviolet radiation absorption characteristics of the alicyclic polyesters used in the invention.

### DESCRIPTION OF THE INVENTION

The resin composition for use in the optical elements of the invention comprises an alicyclic polyester as the thermoplastic resin base.

Alicyclic Polyester Component Alicyclic polyester resins are the polyesters containing the repeating units represented by the formula (I) given below. 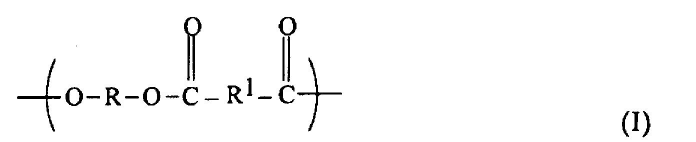 wherein, R is a divalent residual group derived from diol, R¹ is a divalent residual group derived from diacid (dicarboxylic acid), and from R and R¹ at least one of the group contains cycloalkyl ring.

In one embodiment, R is aryl, alkane or cycloalkane residual group containing diol having 6 to 20 carbon atoms and from R and R¹ at least one is an alicyclic group. But, it is desirable that both R and R¹ should be alicyclic groups.

Examples of the R and R¹ groups are given below.

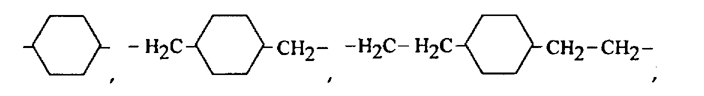

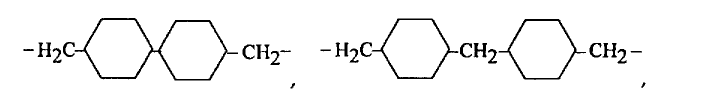

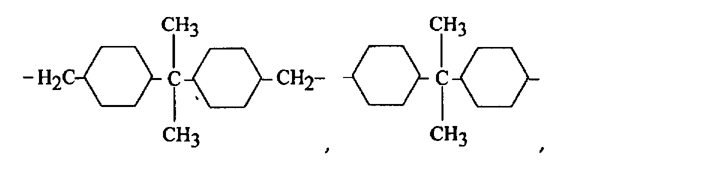

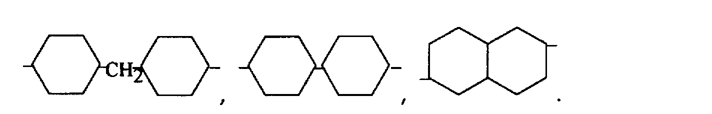

These alicyclic polyesters are the condensate of a diacid and a diol. The diacids and diols can be reacted by the equivalent weight, or one of them can be higher than that. If it contains at least 50molar % of alicyclic diol or alicyclic diacid component, the other components can be linear (not cyclic) aliphatic diacid and / or aliphatic diols.

Applicants have found that when polyesters contain such alicyclic components, they are highly rigid and their transparency does not deteriorate in applications as optical elements, even when they are blended with polycarbonate.

Examples of alicyclic diols represented as HO-R-OH (R is the same as described in formula (I)) are dimethanol decalin, dimethanol bicyclooctane; 1,4-cyclohexanedimethanol, specifically cis and trans isomers; 2,2,4,4-tetramethyl-1,3-cyclobutane diol (TMCBD); triethylene glycol; 1,10-decanediol; or their mixtures. The other diols are straight chain or branched alkane diols containing 2 to 16 carbon atoms.

Examples of such diols are ethylene glycol; propylene glycol(1,2- and 1,3-propylene glycol); 2,2-dimethyl-1,3-propanediol; 2-ethyl-2-methyl-1,3-propanediol; 1,3- and 1,5-pentanediol; dipropylene glycol; 2-methyl-1,5-pentanediol; 1,6-hexanediol, etc. These diols can also be the derivatives of alkyl esters, diaryl esters, etc.

In one embodiment, the alicyclic diacids are carboxylic acids containing 2 carboxylic groups linked to saturated carbons, preferably monocyclic or bicyclic aliphatic acids as diacids, e.g., decahydronaphthalene dicarboxylic acid, norbornene dicarboxylic acid, bicyclooctane dicarboxylic acid, 1,4-cyclohexane dicarboxylic acid or their derivatives, and 1,4-cyclohexane dicarboxylic acid or its derivatives.

Straight chain dicarboxylic acids, such as adipic acid, azelaic acid, dodecane dicarboxylic acid and succinic acid can also be used. The derivatives of alkyl esters (e.g., dialkyl ester, diaryl ester), anhydrides, salts, acid chlorides, acid bromides, etc., can also be included in diacids. In one embodiment, the dialkyl ester of the alicyclic diacid is used. In a second embodiment, dimethyl-1,4-cyclohexanedicarboxylate is used. In one embodiment, the alicyclic group R¹ is derived from 1,4-cyclohexyl diacid. In a second embodiment, in the form with at least 70 mol % trans isomer. In yet another embodiment, the alicyclic group R is derived from 1,4-cyclohexyl primary diols, such as 1,4-cyclohexyldimethanol, etc. In another embodiment, in the form with at least 70 mole % trans isomer. In one embodiment, poly(cyclohexane-1,4-dimethanolcyclohexane-1,4-dicarboxylate) [poly(1,4-cyclohexane-dimethanol-1,4-dicarboxylate)], also called PCCD, represented by the following formula (II) is used as the alicyclic polyester resin of the invention:

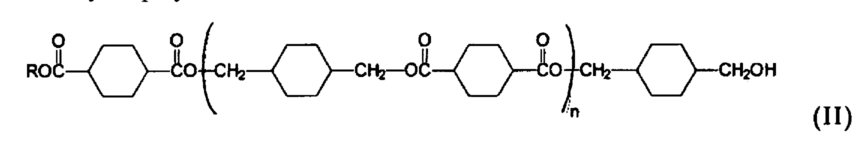

In the alicyclic polyester resin represented by the above-mentioned formula (II), R is the group derived from 1,4-cyclohexanedimethanol and R¹ is cyclohexanedicarboxylate derived from cyclohexane ring, as given in the above mentioned formula (I). The polyester resins containing the above-mentioned components can be manufactured by polycondensation or transesterification reactions.

Polycondensation of polyesters can, generally, be carried out in the molten state in the presence of titanium catalyst such as tetrakis (2-ethylhexyl) titanate, etc. In one embodiment, the amount of such titanium catalyst is 50 ∼ 200 ppm, as calculated in terms of titanium atoms corresponding to last manufactured resin.

In one embodiment, the alicyclic polyester resin used in the invention has a glass transition temperature (Tg) of at least 50°C. In another embodiment, at least 80°C. In yet a third, at least 90 °C and further at least 100°C.

The above-mentioned polyesters are copolymers having structural units derived from polymer aliphatic acid and/or aliphatic polyol of approximatelyl to 50% by weight. Examples of aliphatic polyol are polyethylene glycol, polybutylene glycol, etc.

Preparation methods for these polyesters are mentioned in US Patent Nos. 2,465,316 and 3,047,539.

Polycarbonate Resins A second component of the thermoplastic composition for use in the optical elements of the present invention is polycarbonate. The polycarbonate resins (A) used in the invention are aromatic homopolycarbonate or aromatic copolycarbonate obtained by reacting aromatic dihydroxy compound and carbonate precursors. The polycarbonate resins, generally, contain the repeating structural units represented by the formula (1) given below. 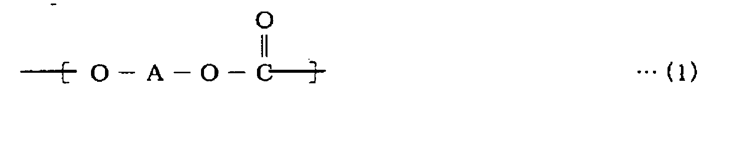 wherein, A is bivalent residual group derived from aromatic dihydroxy compounds.

Typical aromatic dihydroxy compounds are mononuclear or polynuclear aromatic compound containing 2 hydroxy groups as functional groups, wherein each hydroxy group is directly bonded to an aromatic carbon. They can be represented by the following formula (2). 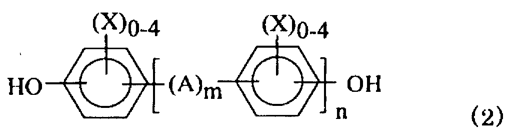 wherein, A is a bivalent hydrocarbon group containing 1 to 15 carbon atoms or a substituted bivalent hydrocarbon group containing 1 to 15 carbon atoms. When more than one X group is present, both the Xs can be the same or different and can be selected from the monovalent hydrocarbon groups such as alkyl groups containing hydrogen, halogen and 1 to 8 carbon atoms, aryl group containing 6 to 8 carbon atoms, arylalkyl groups containing 7 to 14 carbon atoms, alkoxy group containing 1 to 8 carbon atoms. m is 0 or 1 and n varies from 0 to 5.

Optional Components. In one embodiment, the resin composition contains a stabilizer so as to deactivate the catalyst present in the resin component (specifically, polycarbonate resin), e.g., as taught US Patent No. 5,441,997. In another embodiment, the amount of stabilizer to be added is 0.001 to 10% by weight. In yet another embodiment, about 0.005 to 2% by weight with respect to the resin component.

In one embodiment, the composition further contains less than 20% by weight of transparent impact resistance improving agent. Examples include conjugated diene, acrylic acid/methacrylic acid modifiers of acryl elastomer or their aromatic vinyl copolymer. Generally, the impact resistance improving agent contains butadiene or isoprene, butyl acrylate or the structural units derived from aromatic vinyl compounds, if required. Examples of the impact resistance improving agent include, but are not limited to, ethylene-vinyl acetate, ethylene-ethyl acrylate copolymer, SEBS (styrene-ethylene-butylene-styrene) and SBS (styrene-butadiene-styrene) block copolymer, EPDM (ethylene-propylene-diene- monomer), EPR (ethylene-propylene-rubber) copolymer, etc.

In one embodiment, the impact resistance improving agent used in the invention has a refractive index in the range of 1.51 to1.58. In a second embodiment, 1.53 to 1.56.

In yet another embodiment, ABS (acrylonitrile-butadiene-styrene) resin, MBS (butadiene-styrene-methyl methacrylate) resin, or PVC (vinyl chloride) resin, etc. is used as impact resistance improving agent having specified refractive index. In one example of the invention, ABS is used.

The composition for the optical elements of the present invention can also contain mold lubricants, antioxidants, stabilizers, ultraviolet absorbers etc. Silicone mold lubricants, such as methylphenyl silicone oil, etc., carboxylate esters of a polyhydric alcohol, such as pentaerythritol tetrastearate or glyceryl monostearate, licowax etc. and olefin mold lubricants such as α-olefins or their derivatives, can be used.
Acidic phosphite, alkyl phosphite, aryl phosphates or mixed phosphite containing at least 1 hydrogen or aryl group, IB group or IIB group metal phosphate, orthophosphoric acid, acidic pyrophosphoric acid metal salts or their mixtures are used in some embodiments as stabilizers. The amount used is determined on the basis of the quantity of polyester and polycarbonate components used.

Examples of antioxidants include 3-(3,5-ditertiarybutyl-4-hydroxyphenyl) propionic acid, esters of 3-(3-tertiarybutyl-4-hydroxy-5-methylphenyl) propionic acid and monohydric and tetrahydric alcohol, etc. Examples of phenolic antioxidants include stearyl-3-(3,5-ditertiarybutyl-4-hydroxyphenyl) propionate, thiodiethyleneglycol bis [3-(3,5-ditertiarybutyl-4-hydroxyphenyl)propionate], 1,6-hexamethylenebis[3-(3,5-ditertiarybutyl-4-hydroxyphenyl) propionate], 1,3,5-tris[3-(3,5-ditertiarybutyl-4-hydroxyphenyl)propionyloxyether] isocyanurate, tetrakis[methylene-3(3,5-ditertiarybutyl-4-hydroxyphenyl)propionate] methane, 3,9-bis[1,1-dimethyl-2-[3-(3-tertiarybutyl-4-hydroxy-5-methylphenyl)propionyloxy]-ethyl]-2,4,8,10-tetraoxaspiro[5.5] undecane, triethyleneglycolbis[3-(3-tertiarybutyl-4-hydroxy-5-methylphenyl)propionate], etc.

Examples of ultraviolet absorbers include benzotriazole ultraviolet absorber, benzophenone ultraviolet absorber, salicylate ultraviolet absorber, etc. The preferred ultraviolet absorbers are 2-(5-methyl-2-hydroxyphenyl) benzotriazole, 2-(3,5-di-tert-butyl-2-hydroxyphenyl) benzotriazole, 2-(3-tert-butyl-5-methyl-2-hydroxyphenyl)-5-chlorobenzotriazole, 2-(3,5-di-tert-butyl-2-hydroxyphenyl)-5-chlorobenzotriazole, 2-(2'-hydroxy-5-octylphenyl) benzotriazole, etc.

In one embodiment, epoxy stabilizers can also be used. Moreover, inorganic, organic and thioester stabilizers as well as thiol, and metal salt stabilizers, etc., can also be used.

So long as the optical properties of the resin composition are not impaired, thus affecting the final optical element articles, known additives such as coloring agents (carbon black, titanium oxide pigment, dyes), fillers, reinforcing agents (glass fibre, carbon fibre, talc, clay, mica, glass flakes, milled glass, glass beads, etc.), lubricant, plasticizer, fire retardant, fluidity modifiers, etc., can also be added at the time of blending or molding of the composition.

The amount of these additives can be determined in accordance with the amounts of the polyester and polycarbonate components used.

Processing of the thermoplastic composition. Alicyclic polyester resins are blended with polycarbonate resins for the composition of the present invention. There is no restriction for the blending methods. Generally, the blending can be carried out by melt-blending at normal pressure, under reduced pressure or increased pressure.

The blending apparatus includes extruder, Banbury mixer, roller, kneader, etc. They are operated either batch-wise or continuously. There is no specific mixing order of the components.

Fabrication of composition In one embodiment of the invention, the weight ratio of alicyclic polyester resin and polycarbonate (polyester: polycarbonate) is in the range of 0:100 to 95:5. In a second embodiment, from 20:80 to 80:20. In a third embodiment, from 30:70 to 70:30. In one embodiment, more polyester than polycarbonte is used so as to improve the properties as compared to compositions comprising mainly polycarbonate resin, and to obtain low heat deflection temperature. High chemical resistance and high ultraviolet radiation resistance (weather resistance) can be imparted to the polycarbonate resin by adding alicyclic polyester to it.

In one embodiment, the above-mentioned composition has at least 75% light transmittance. In another embodiment, at least 80% light transmittance. In one embodiment, the refractive index of the above-mentioned compositions is in the range of 1.50 to 1.60.

The composition is ideal for applications such as for optical elements, e.g., lenses, because they have the above-mentioned transparency and at the same time, an appropriate refractive index.

In one embodiment, the glass transition temperature of the above-mentioned composition is in the range of 50 to 150°C. In another embodiment, from 60 to 110°C. Generally, glass transition temperature of polycarbonate is high, but as the resin composition contains alicyclic polyester resin with low glass transition temperature, the overall glass transition temperature is lowered. Consequently, fluidity of the composition itself is excellent, lending to molding into thin products.

As the composition contains alicyclic polyester with excellent weather resistance in comparison to that of the conventional thermoplastic resins, the absorption of light in ultraviolet region by the obtained molded articles is low, thus little or no discoloration over time due to the absorption of ultraviolet radiation. Specifically, the weather resistance is good as compared to that of the conventional thermoplastic resins such as polycarbonate, etc.

Ultraviolet radiation absorption characteristics of the resin composition used in the optical elements of this invention are given in Fig. 1. Ultraviolet absorption characteristics can be evaluated by measuring absorption from an ultraviolet region to the visible region with the help of a spectrophotometer using samples prepared from the specified molded part or after dissolving it in an organic solvent. Chloroform, methylene chloride etc., can be used as organic solvents for dissolving the sample. The results shown in Fig. 1 were obtained by using chloroform as organic solvent and alicyclic polyester as alicyclic polyester resin.

Optical Components As previously indicated, the resin composition has excellent weather resistance, and a chemical resistant coating is not required on the surface of fabricated articles, thus particularly suitable for use in optical elements. The optical parts referred here include lenses for telescope, binocular, camera, spectacles, etc., prisms, optical film, aperture for emission of elements, transparent cover for monitor and electrical appliances, aperture glass, optical transmission cable, transparent base for liquid crystal display (LCD), etc.

In accordance with the objective and desired shape of the optical elements, they can be manufactured by selecting any of the methods from injection molding, blow molding, extrusion molding, vacuum-pressure molding, co-injection molding, coextrusion, overmolding, multi-shot injection molding, sheet molding, etc. Optical elements in the form of films can be manufactured on an industrial scale by the conventional methods by using the film obtained from the above-mentioned thermoplastic resin compositions by thermal fusion followed by non-drawing, mono-axial drawing, successive biaxial drawing, simultaneous biaxial drawing or inflation film method. They can also be produced by using the film obtained by the cast film manufacturing method from the solution prepared by dissolving the above-mentioned thermoplastic resin compositions in specific solvent.

Required strength and thickness of the film obtained by the cast film manufacturing method can be regulated by non-drawing, mono-axial drawing, successive biaxial drawing and simultaneous biaxial drawing method. Furthermore, grant of the electroconductive treatment as represented by ITO and the refractive index represented by the phase difference film to the film itself or its surface is also possible.

Result of the Invention Optical elements with outstanding impact resistance, chemical resistance and weather resistance from specific resin composition by molding may be obtained which was not possible by the conventional methods. As the resin composition of the present invention has a low double refraction, the transmitted light does not get refracted and thus enables the optical elements of the invention to have excellent permeability of light.

Additionally, as the optical elements of the invention have excellent weather resistance, the discoloration phenomenon is very less even when they are exposed to ultraviolet radiation for a long time. Moreover, as they do not require chemical resistant coating, the manufacturing process is not complicated and is inexpensive compared to the process of making the optical elements in the prior art.

As the resin composition used in the invention has excellent molding characteristics (high fluidity), thin films can be produced from the composition, the productivity is substantially better. It becomes possible to obtain superior optical elements from the viewpoint of resource savings and environmental problems.

As the molded components themselves are highly transparent, there is wide scope for the designing of articles and value-addition to them.

EXAMPLES This invention is further explained with the help of the following embodiments, but it is not limited to these examples only.

The following resin materials were used in the embodiment and comparative examples.

Alicyclic Polyester Polycyclohexanedimethanolcyclohexane dicarboxylate (PCCD) was used as alicyclic polyester.

Polycarbonate (PC) Lexan® 150 and Lexan® SP1010 manufactured by the Japan GE Plastics, Co. Ltd..

ABS Resin Blendex® 415 manufactured by GE Speciality Chemicals was used as ABS resin.

Alicyclic Polyester Resin Composition The composition (A) obtained by melt blending the above-mentioned PCCD at 35 weight by parts and PC (Lexan 105) at 65 weight by parts. Composition (B) is obtained by melt-blending PCCD at 45 weight by parts and PC (Lexan105) at 55 weight by parts. Composition (C) is obtained by melt-blending PCCD at 60 weight by parts and PC (Lexan 105) at 40 weight by parts. Composition (D) is obtained by fusing-kneading the PCCD at 45 weight by parts, PC at 45 weight by parts, and ABS at 10 weight by parts. These compositions are used as the base "alicyclic polyester resins."

Manufacture of Optical Plastic Components The above-mentioned alicyclic polyester resin compositions A to D (embodiments 1, 2, 3 and 4) and LexanSP1010 (comparative example 1) were dried overnight in an air dryer at 70°C to 120°C and then molded sheet articles were manufactured by injection molding machine.

Izod Impact Strength 1/8-inch thick test samples were prepared from the resultant molded articles, and after inserting 0.05 mm notch, they were regulated at 23 °C ±2 °C, 50% ±5% RH for at least 48 hours and then their impact strength was determined.

Melt Flow Rate The melt flow rate was determined at 300°C by applying a 1.2 kg load in conformity to JIS K 7112.

Optical Transmittance 3mm thick colored plates were prepared from the resultant molded articles and their optical transmittance was determined by using ultraviolet-visible absorption spectrophotometer in accordance with ASTM D 1003.

Haze Value Haze value of the molded articles was determined in accordance with ASTM D 1003.

Photo Refractive Index The photo refractive index was determined in conformity to ASTM D542.

Chemical Resistance ASTM 1/8 inch molded articles were coated with gasoline and Coppertone sun protect (SPF30). The samples were observed over a period of 48 hours.

The characteristics of chemical resistance are given below

| | |
|---|---|
| No crack and crazing is observed | ○ |
| Crazing is observed | Δ |
| Crack is seen | X |

The results are given in table 1.

**Table 1**

| | Embodiment 1 | Embodiment 1 | Embodiment 1 | Embodiment 1 | Comparative Example 1 |
|---|---|---|---|---|---|
| Composition | A | B | C | D | Lexan SP1010 |
| Izod impact strength J/m | 710 | 660 | 1120 | 800 | 643 |
| Melt Flow Rate g/10 min | 15 | 44 | 20 | 44 | 45 |
| Optical transmittance % | 88 | 88 | 88 | 83 | 88 |
| Haze Value % | 1.1 | 1.3 | 0.9 | 5.1 | 0.9 |
| Refractive Index (e rays) | 1.556 | 1.554 | 1.54 | - | - |
| Gasoline | O | O | O | O | X |
| Coppertone SPF 30 | O | O | O | O | X |

## Claims

1. An optical element obtained from thermoplastic resin composition having at least 75% light transmittance, comprising alicyclic polyester.

2. The optical element of claim 1, wherein said thermoplastic resin composition has a refractive index in the range of 1.50 tol.60.

3. The optical element of claim 1 or claim 2, wherein the alicyclic polyester is polycyclohexanedimethanolcyclohexanedicarboxylate.

4. The optical element of any preceding claim, wherein the thermoplastic resin composition comprises alicyclic polyester and polycarbonate, and wherein the weight ratio of polycarbonate: alicyclic polyester is in the range of 0:100 to 95:5, based on the total weight of said composition.

5. The optical element of claim 4, wherein the thermoplastic resin composition comprises alicyclic polyester and polycarbonate, and wherein the weight ratio of polycarbonate: alicyclic polyester is in the range of 30:70 to 70:30, based on the total weight of said composition.

6. The optical element of claim 4 or claim 5, wherein the polycarbonate comprises bisphenol A, spirobiindan bisphenol, aryl substituted bisphenol, alicyclic bisphenol, structural units therefrom, or mixtures thereof.

7. The optical element of any preceding claim, wherein the thermoplastic resin composition further contains less than 20 wt. % a transparent impact resistance improving agent, based on the total weight of said composition.

8. The optical element of claim 7, wherein the impact resistance improving agent has a refractive index in the range of 1.51 to 1.58.

9. The optical element of claim 7, wherein the impact resistance improving agent is acrylonitrile-butadiene-styrene (ABS) resin.

10. The optical element of any preceding claim, in the form of an injection molding part, blow molding part, extruded part, vacuum-pressure molding part, or film-casted part.

11. The optical element of claim 1, in the form of lenses for telescopes, lenses for binoculars, lenses for cameras, lenses for spectacles, prisms, optical films, apertures, a transparent cover for a monitor, a transparent cover for electrical appliances, an aperture glass, optical transmission cables, or a transparent base for liquid crystal displays.

12. An optical element fabricated by the process of:
a) melt blending a thermoplastic composition comprising alicyclic polyester and polycarbonate, in a ratio of polyester to polycarbonate of 5:95 to 95:5, based on the total weight of said composition, wherein said thermoplastic composition has a refractive index in the range of 1.50 to 1.60
b) forming said thermoplastic composition into an optical element having at least a 75% light transmittance.

13. A process for fabricating an optical element, said process comprises:
a) melt blending a thermoplastic composition comprising alicyclic polyester and polycarbonate, in a ratio of polyester to polycarbonate of 5:95 to 95:5, based on the total weight of said composition, wherein said thermoplastic composition has a refractive index in the range of 1.50 to1.60;
b) forming said thermoplastic composition into an optical element having at least a 75% light transmittance.
